# EUROPEAN PATENT SPECIFICATION

(11) **EP 4 253 289 B1**
(45) Date of publication and mention of the grant of the patent: **02.12.2026**
(21) Application number: 23165381.7
(22) Date of filing: 30.03.2023
(51) Int. Cl.: B65G 54/02, B65B 35/10, B65G 47/256

(54) **APPARATUS AND METHOD FOR CONVEYING ARTICLES AND PLANT AND METHOD FOR PACKAGING SAID ARTICLES**
VORRICHTUNG UND VERFAHREN ZUM FÖRDERN VON ARTIKELN UND ANLAGE UND VERFAHREN ZUM VERPACKEN DIESER ARTIKEL.
APPAREIL ET PROCÉDÉ POUR TRANSPORTER DES ARTICLES ET INSTALLATION ET PROCÉDÉ POUR EMBALLER LESDITS ARTICLES.

(30) Priority: 31.03.2022 IT 202200006365
(43) Date of publication of application: 04.10.2023
(73) Proprietor: CT PACK S.r.l., 40053 Valsamoggia (BO) (IT)
(72) Inventor: ROSIGNOLI, David, 44123 PONTEGRADELLA (FERRARA) (IT); PAVANELLI, Fabrizio, 44124 FERRARA (IT)
(74) Representative: Milli, Simone

(56) References cited:
- EP-A1- 3 109 189
- EP-A1- 3 656 707
- WO-A1-2021/001863
- DE-A1- 102012 210 329
- DE-A1- 102014 119 351
- DE-A1- 102014 226 965
- DE-A1- 102018 102 612
- KR-A- 20170 033 652
- US-A1- 2017 320 682
- US-A1- 2019 233 220

## Description

The present invention relates to an apparatus and a method for conveying articles, in particular foodstuffs (for example biscuits, crisps, etc.) as well as a plant and a method for packaging said articles.

In the food industry, various systems are known for transferring and conveying articles for packaging purposes; such systems are provided with packaging lines, for example of flow-wrapper type.

Disadvantageously, in the known systems the articles conveyed and positioned on the packaging lines can slip and/or roll.

Rubbing and friction caused by slipping and rolling can damage articles and compromise their quality, thus posing the risk of jamming or wear as well of movable elements of the machine due to possible fragments of the articles themselves.

Consequently, the production waste due to defective or ruined articles not satisfying the desired features and that cannot go on towards packaging increases.

Therefore, there exists the need to overcome the above-mentioned drawbacks of the prior art.

Document WO 2021/001863 A1 discloses an apparatus for conveying articles according to the preamble of claim 1.

Document DE102014119351A1 shows a device for moving objects, in particular portions, wherein each portion comprising at least one slice cut from a food product, comprising a plurality of individually movable transport movers for at least one object each, a track system for the transport movers, in which the transport movers can be moved along at least one specified track in a transport direction, and a control apparatus for controlling the motions of the transport movers in the track system.

The one track segment and/or at least one transport mover has at least one support, which is frame-free at every point in time or at least at times, for at least a part of a holder, in particular a bowl-like holder, for holding at least one object to be transported, in particular for a packaging or a part of a packaging,
preferably for a tray for holding at least one portion, and wherein, in addition to the support, fastening means are provided, which are designed to fasten the holder to the support at least at times.

Aim of the present invention is to satisfy the above cited need by providing an apparatus and a method for conveying articles that maintain quality and integrity of articles, reducing production waste.

The invention provides an apparatus for conveying articles according to claim 1 and a method for conveying articles according to claim 9.

The advantages and features of the apparatus and method for gathering articles together according to the present invention will be clearer from the following description of an exemplary and not limiting embodiment, with reference to the appended drawings, in which:

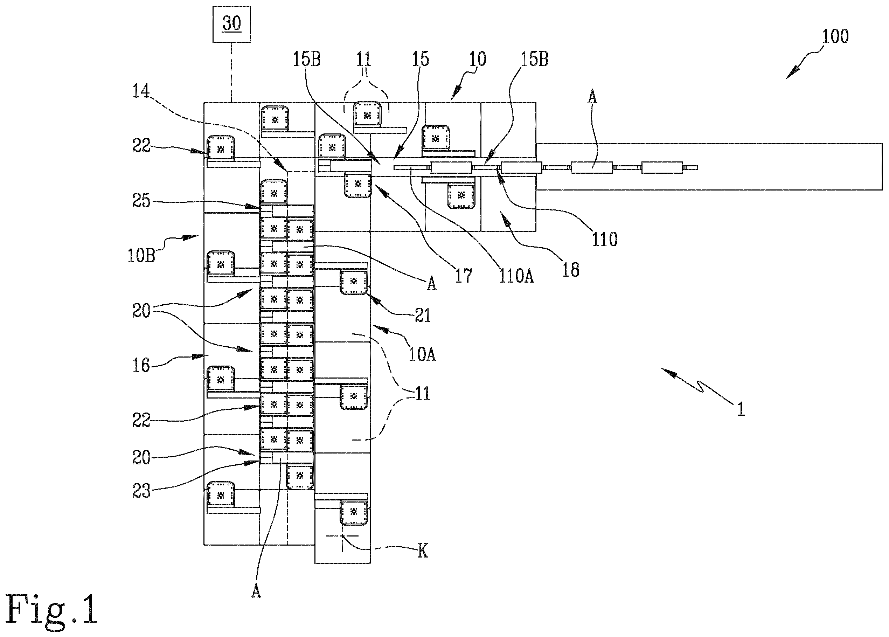

- figure 1 shows a top view of a packaging plant comprising an apparatus for conveying articles, according to the present description,
- figure 2 shows a perspective view of the packaging plant of figure 1, wherein the apparatus 1 is shown with some removed portions,
- figure 3 shows a side view of the packaging plant of figure 1,
- figure 4 shows a front view of a conveying unit of the packaging plant of figure 1, according to the present description,
- figure 5 shows a perspective view of the conveying unit of figure 4,
- figure 6 shows a perspective exploded view of the conveying unit of figure 4,
- figure 7 shows a perspective view of an articles receiving and positioning station and of the packaging plant of figure 1.

According to an aspect of the invention, an apparatus 1 for conveying articles A according to claim 1 is provided.

The articles A are foodstuffs, as for example biscuits, crisps etc. Preferably, but not limitingly, the cited articles A are packageable articles, for example in packaging tubes.

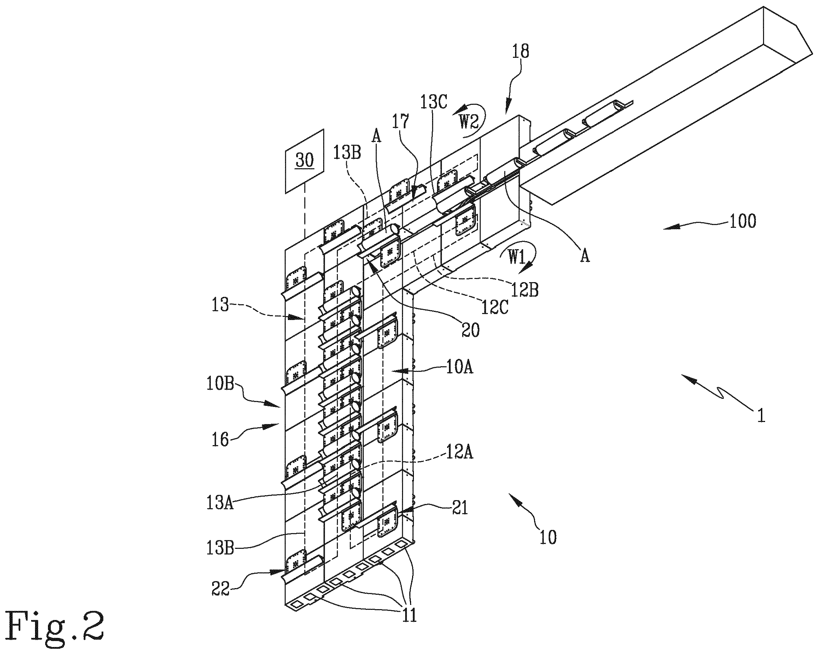

The apparatus 1 comprises a conveying surface 10 comprising a plurality of electrically magnetizable elements 11, as it is shown in figure 2.

In a preferred embodiment, the electrically magnetizable elements 11 are defined by electrical coils (i.e. electrical cables wound according to a predetermined geometry), possibly connected to a ferromagnetic material. The apparatus 1 comprises a plurality of units 20 for conveying articles A. The units 20 are movable on the conveying surface 10.

Each conveying unit 20 is defined by a first transport element 21 and a second transport element 22 configured to be coupled with each other. The first and second transport element 21, 22 define together a seat 23 for housing articles A.

Preferably, the seat 23 defined by the first and second transport element 21, 22 is provided with an upper opening 25, to allow the articles A to be introduced inside the seat 23 itself from above.

Each first and second transport element 21, 22 comprises at least a magnetic element 24.

Each first and second transport element 21, 22 comprises respectively a first portion 26A for housing articles A defining a portion of the seat 23 and a second portion 26B in which the magnetic element 24 is housed.

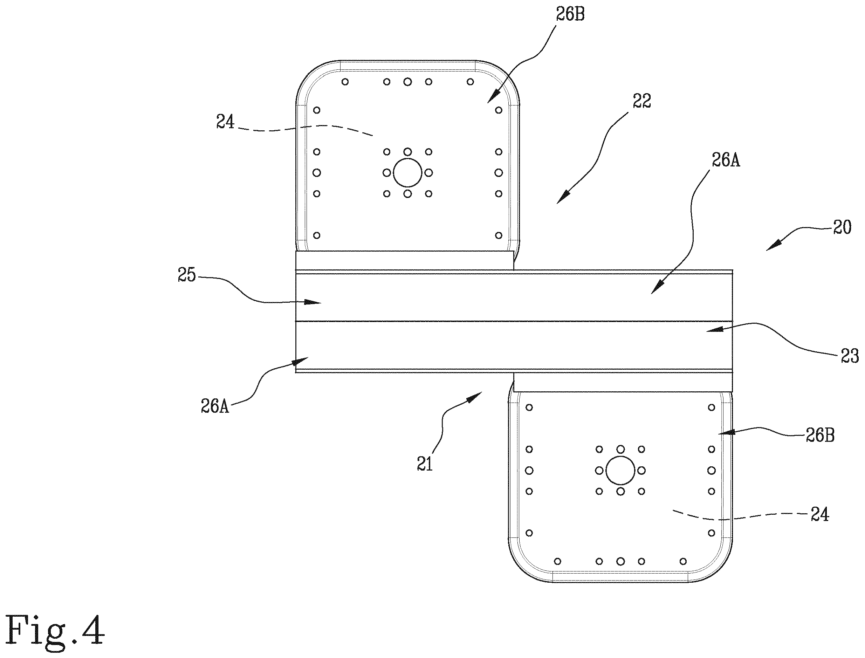

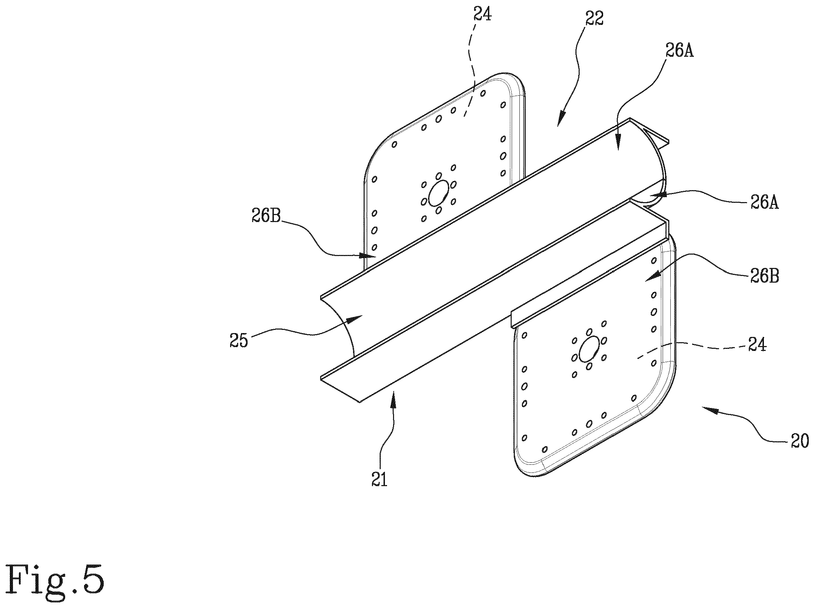

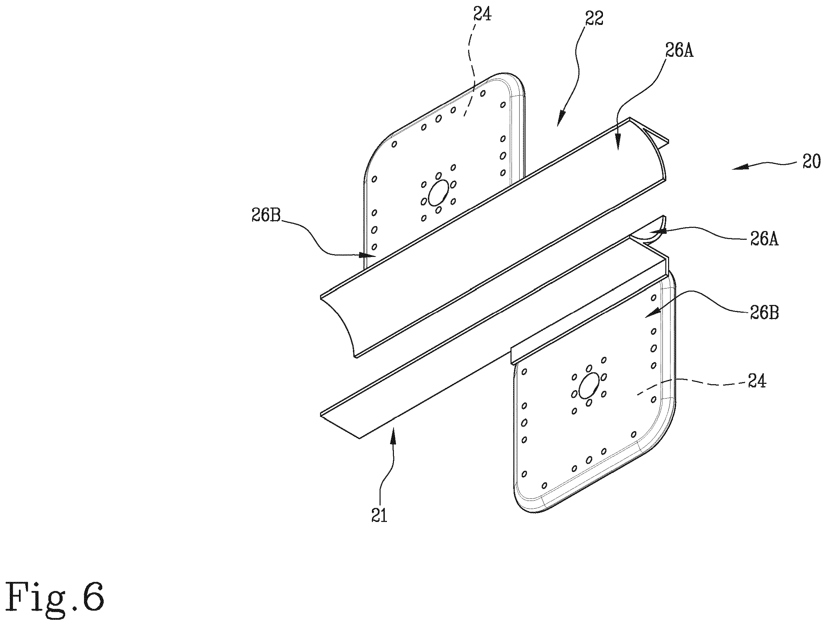

In an embodiment shown in figures 4-6, the portion 26A is substantially a hollow semi-cylinder intended to house articles A and the portion 26B defines a wing of the unit 20 and is preferably, but not limitingly, provided with a square section with beveled angles.

So, it is to be observed that the seat 23 is preferably shaped as a hollow semi-cylinder.

In a preferred embodiment, the first and second transport element 21, 22 have same shape.

The apparatus 1 comprises a control unit 30.

The control unit 30 can comprise hardware and/or software electronic modules, arranged in the same control device or of distributed type.

The control unit 30 is connected to the electrically magnetizable elements 22 of the conveying surface 11 to activate and deactivate them, so as to generate a predetermined variable magnetic field on the conveying surface 10.

By deactivating and activating the magnetizable elements 11 the control unit 30 allows each first and second transport element 21, 22 to be moved on the conveying surface 10.

It is also to be observed that the control unit 30 is configured to activate the magnetizable elements 11 by adjusting the intensity of the magnetic field on the conveying surface 10 generated by such activated magnetizable elements 11.

In particular, the magnetic field on the conveying surface 10 interacts with the magnetic elements 24 of each first and second element 21, 22, thus allowing their movement on the surface 10 itself.

Advantageously, the articles A contained in the seats 23 are transported along the surface 10 thanks to the movement of the units 20 along the surface 10 itself.

By means of the movement of the conveying units 20 the articles A are transported avoiding slipping or rolling, maintaining the integrity of the articles A themselves.

It is to be observed that, preferably, the conveying units 20 are moved on the conveying surface 10 without slipping, i.e. they are kept lifted as a result of the magnetic field generated by the magnetizable elements 11.

The electrically magnetizable elements 11 are configured to allow to generate a variable magnetic field to move the first and second transport elements 21, 22 of the conveying units 20 in at least a first direction x and/or in a second direction y, orthogonal to the first direction x, on the conveying surface 10.

Such directions x and y lie on the conveying surface 10.

The control unit 30 is configured to control the electrically magnetizable elements 11 so as to move the transport elements 21, 22 along directions x, y of the conveying surface 10.

Advantageously, by moving the transport elements 21, 22 along the directions x and y, it is possible to individuate paths for the elements 21, 22 themselves.

In a not shown embodiment, the electrically magnetizable elements 11 are configured to allow to move the first and second transport elements 21, 22 of the conveying units 20 also along a third direction z, orthogonal to the directions x and y.

In a not shown embodiment, the electrically magnetizable elements 11 are configured to allow to generate a variable magnetic field to rotate the first and second transport elements 21, 22 of the conveying units 20 about an axis of rotation K on the conveying surface 10.

Preferably, the axis K is orthogonal to the conveying surface 10.

The control unit 30 is configured to control the electrically magnetizable elements 11 so as to rotate the elements 21, 22 about the axis of rotation K.

The conveying surface 10 comprises a first portion 10A and a second portion 10B.

The first portion 10A of the conveying surface 10 does not coincide with the second portion 10B of the conveying surface 10.

It is to be observed that the first portion 10A of the conveying surface 10 and the second portion 10B of the conveying surface 10 share a common boundary 14.

The control unit 30 is configured to control the electrically magnetizable elements 11 of the conveying surface 10 so as to move the first transport elements 21 in the first portion 10A along a first closed path 12 and the second transport elements 22 in the second portion 10B along a second closed path 13.

The first closed path 12 is not overlapped to the second closed path 13.

The first transport elements 21 move along the first closed path 12 in a clockwise direction w1 and the second transport elements 22 move along the second closed path 13 in a counterclockwise direction w2. The first closed path 12 comprises a first portion 12A and a second portion 12B.

The second closed path 13 comprises a first portion 13A and a second portion 13B.

Along the portions 12A and 13A of the first and second closed path 12 and 13, the transport elements 21, 22 are coupled defining the seat 23 of the unit 20.

Along the portions 12B and 13B of the first and second closed path 12 and 13, the transport elements 21, 22 are not coupled and do not transport any article A.

Furthermore, the first closed path 12 comprises a third portion 12C and the second closed path 13 comprises a third portion 13C. As it will be explained better in the following, along the portions 12C and 13C of the first and second closed path 12 and 13, the transport elements 21, 22 can be uncoupled to allow possible defective articles A to be discarded or can remain coupled until a release of the articles A to be conveyed.

Inside the conveying surface 10, along each closed path 12, 13 it is possible to individuate an area 16 for receiving articles A, an area 17 for discharging defective articles A and an area 18 for releasing the conveyed articles A.

The area 16 for receiving articles A comprises the portions 12A and 13A of the first and second closed path 12 and 13.

In fact, in the receiving area 16 the transport elements 21, 22 are coupled, defining the seat 23 of the unit 20.

The articles discharging area 17 and the articles releasing area 18 comprise the portions 12C and 13C of the first and second closed path 12 and 13.

Along the portions 12C and 13C, the transport elements 21, 22 can be uncoupled in the articles discharging area 17 to allow possible defective articles A to be discarded or can remain coupled up to the articles releasing area 18 in order to be then uncoupled and to allow the release of the articles A to be conveyed.

The transport elements 21, 22, coupled so to constitute the conveying unit 20, receive in the receiving area 16 articles A that are then arranged in the seat 23 of the conveying unit 20.

In particular, the control unit 30 is configured to control the electrically magnetizable elements 11 in the area 16 for receiving articles A of the conveying surface 10, so that the first and the second transport element 21, 22 are coupled (so as to define the seat 23) and can receive articles (in the seat 23).

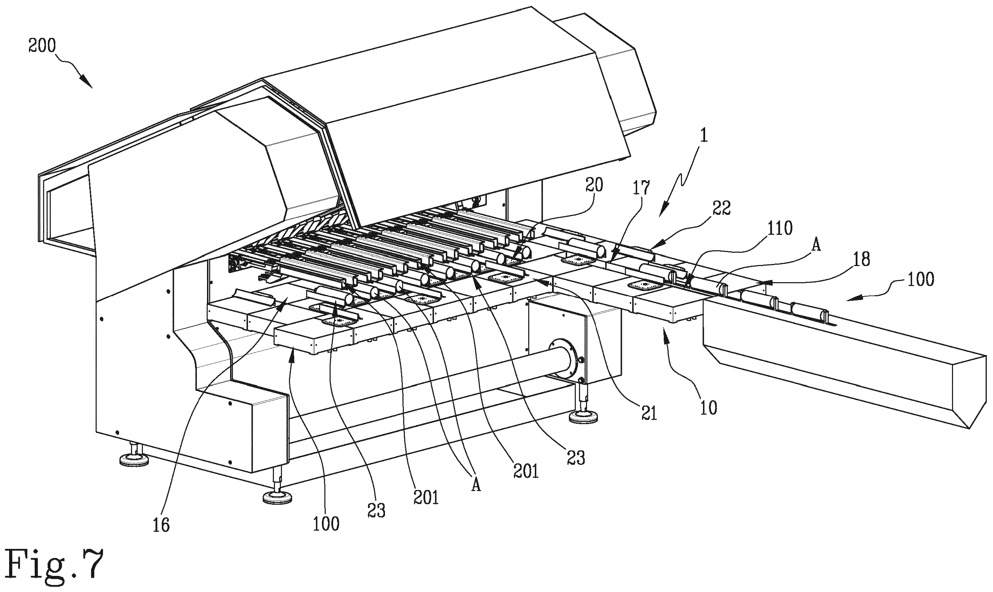

The articles A can be introduced in the seats 23 of the units 20 for example by means of articles receiving and positioning stations 200 of the type shown in figure 7, in which the articles A are positioned in the respective seats 23 by means of rotating platform scales 201.

The coupled transport elements 21, 22 move along the portion 12A and 13A of the first and second closed paths 12 and 13 until they reach the area 17 for discharging defective articles A and in the following the area 18 for releasing conveyed articles A.

By means for example of a system of cameras (not shown), it is possible to evaluate the integrity of the transported articles.

In an embodiment, the conveying surface 10 is provided with an opening 15.

The opening 15 allows to move the conveyed articles A away from the conveying surface 10.

The portions 12C and 13C of the first and second closed path 12 and 13 are developed on opposite portions of the opening 15.

The opening 15 is preferably provided with a discharge portion 15A and a transport portion 15B.

The transport portion 15B is arranged downstream of the discharge portion 15A, by considering the directions w1 and w2 in which the transport elements 21, 22 move.

The control unit 30 is configured to control the electrically magnetizable elements 11 of the conveying surface 10, so as to uncouple the first and second transport element 21, 22 at the discharge portion 15A of the opening 15.

In other words, the control unit 30 is configured to control the electrically magnetizable elements 11 in the discharge area 17 of articles A of the conveying surface 10, so as to uncouple the first and second transport element 21, 22 at the discharge portion 15A of the opening 15.

The conveying unit 20 is also provided with an integrated weighing system which allows to evaluate if the quantity of articles A positioned in the seat 23 is correct.

Starting from the applied power of each unit 20 the consumption due to the movement of the unit 20 itself is related to the mass transported and consequently the weight of the transported articles A is obtained.

In case in the seat 23 a not complying quantity of articles A is provided, the two transport elements 21, 22 are separated, discarding the articles A. It is to be observed that the control unit is so configured to infer, starting from a supplying power of such units 20 (by means of an electrical paramaters measure, for example current/voltage), a measure of the weight of the transported articles A. This determines an automatic and integrated weighing system. In fact, by means of the measure of an electrical parameter, it is possible to infer a measure of the weight of the transported articles A: a greater weight of articles A requires in fact greater power, to be transported.

Advantageously, the uncoupling of the elements 21, 22 allows defective or lacking articles A contained in the seats 23 of said conveying units 20 to be discharged.

In other words, in case the articles A contained in the seat 23 of the conveying unit 20 are damaged or in a not correct quantity, the uncoupling of the transport elements 21, 22 occurs at the opening 15 of the surface 10.

The two transport elements 21, 22 are separated and the damaged articles fall at the portion 15A of the opening 15 and are consequently discarded.

If the articles A contained in the seat 23 of the conveying unit 20 are intact and complying to packaging, the transport elements 21, 22 remain coupled until they reach the area 18 for releasing the conveyed articles A. When the unit 20 arrives at the portion 15B of the opening 15 of the surface 10 (i.e. in the release area 18) the transport elements 21, 22 are separated thus releasing the intact conveyed articles A.

According to another aspect, a packaging plant 100 according to claim 7 is provided.

The packaging plant 100 comprises the apparatus 1 for conveying articles A according to what just described.

The packaging plant 100 comprises a packaging line 110 to allow the packaging of the articles A conveyed by the conveying units 20.

At least a portion 110A of the packaging line 110 passes through a transfer portion 15B of articles A of the opening 15 of the conveying surface 10.

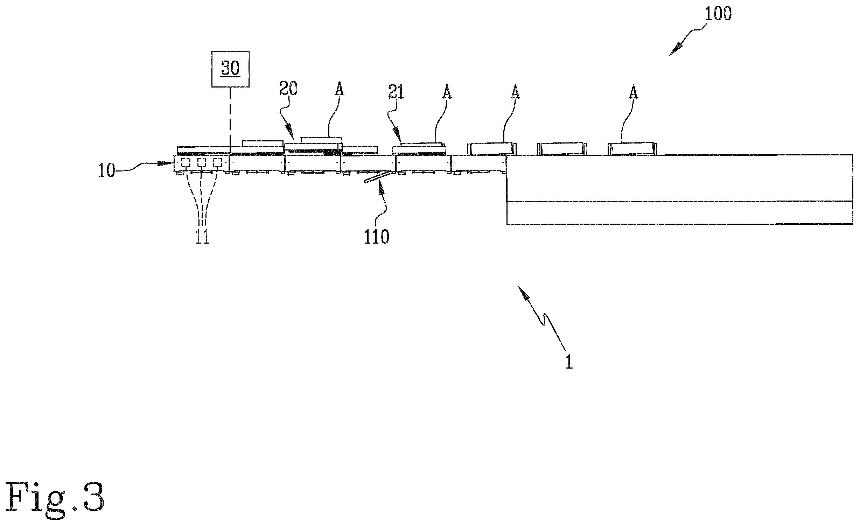

Preferably, as it is shown in figure 3, the packaging line 110 is developed in a position below the conveying surface 10 to pass then through the opening 15.

The control unit 30 is configured to control the electrically magnetizable elements 11 of the conveying surface 10, so as to uncouple the first and second transport elements 11 at the transfer portion 15B of articles A of the opening 15 of the conveying syrface 10, to give the packaging line 110 the articles A contained in the seats 23 of said conveying units 20.

The control unit 30 is so configured to control the electrically magnetizable elements 11 in the area 18 for releasing articles A of the conveying surface 10, so as to uncouple the first and second transport element 21, 22 along the portions 12C and 13C of the first closed first and second closed path 12, 13 at the transfer portion 15B of the opening 15.

In other words, the articles A, at the conveying area 18 of the surface 10, are given the packaging line 110 leaving the conveying surface 10 and going forward towards the packaging.

Advantageously, the articles A are conveyed up to the packaging line 110 without that slipping and/or rolling can damage them.

Furthermore, the articles A arriving to the packaging line 110 have been controlled yet, for example thanks to the weighing system or by means of cameras, so to ensure that only the intact articles are packaged. According to an aspect, a method according to claim 9 for conveying articles A, in particular foodstuffs, is provided.

The method comprises a step of providing a conveying surface 10 comprising a plurality of electrically magnetizable elements 11.

The electrically magnetizable elements 11 are for example electrical coils. The method comprises a step of providing a plurality of units 20 for conveying articles A, movable on said conveying surface 10, wherein each conveying unit 20 is defined by a first transport element 21 and a second transport element 22.

Each first and second transport element 21, 22 comprises at least a magnetic element 24.

The method comprises a step of coupling the first and second transport element 21, 22 with each other so as to define a seat 23 for housing articles of a convying unit 20.

The method comprises a step of releasing articles A inside the seat 23 for housing the conveying unit 20.

In a preferred embodiment, the step of releasing articles A inside the seat 23 for housing conveying units 20 comprises a step of releasing articles A at the top inside the housing seat 23.

In particular, the articles A are released through an upper opening 25 of the conveying unit 20.

The method comprises a step of generating a predetermined variable magnetic field on the conveying surface 10 by activating and deactivating the electrically magnetizable elements 11, to allow consequently the first transport element 21 and the second transport element 22 to be moved on the conveying surface 10.

In other words, by magnetizing (according to different amplitudes and/or polarities) different areas of the surface 10 over time the first and second transport elements 21, 22 are moved on the conveying surface 10.

In an embodiment, the step of generating a predetermined variable magnetic field on the conveying surface 10 comprises a step of moving the first transport element 21 and the second transport element 22 along a direction x and/o a direction y (orthogonal to the direction x) of the conveying surface 10.

In an embodiment, the step of generating a predetermined variable magnetic field on the conveying surface 10 to allow the first transport element 21 and the second transport element 22 to move on said conveying surface 10 comprises a step of moving the first transport element 21 along a first closed path 12 lying on the conveying surface 10 and of moving the second transport element 22 along a second closed path 13 lying on the conveying surface 10.

The first and second closed path 12, 13 do not coincide.

The method comprises a step of uncoupling the first and second transport element 21, 22 at an opening 15 of the conveying surface 10.

In a preferred embodiment, the method comprises a step of uncoupling the first and second transport element 21, 22 at a discharge portion 15A of an opening 15 of the conveying surface 10, so as to discard defective articles A contained in the seat 23 for housing the conveying unit 20. Advantageously, uncoupling the first and second transport element 21, 22 to discard defective articles A avoids that damaged articles are packaged.

According to an aspect, a packaging method according to claim 13 is provided. The packaging method comprises all the above described steps of the conveying method.

The packaging method comprises a packaging step of the articles A by means of a packaging line 110 to allow not discarded articles A to be packaged.

In more detail, at least a portion of the packaging line 110 passes through a transfer portion 15B of articles A of the opening 15 of the conveying surface 10.

Preferably, the packaging method comprises a step of uncoupling the first and second transport element 21, 22 of a conveying unit 20 at the transfer portion 15B of articles of the opening 15 of the conveying surface 10, to give the packaging line 110 the articles A contained in the seat 23 of the respective conveying unit 20.

## Claims

1. An apparatus (1) for conveying articles (A) comprising:
- a conveying surface (10) comprising a plurality of electrically magnetisable elements (11);
- a plurality of units (20) for conveying articles (A), movable on said conveying surface (10), each conveying unit (20) being defined by a first transport element (21) and by a second transport element (22) configured for coupling with each other and defining, together, a seat (23) for housing articles (A), the first and the second transport elements (21, 22) each comprising at least one magnetic element (24);
- a control unit (30), connected to said electrically magnetisable elements (11) of the conveying surface (10) to activate them and deactivate them, so as to generate a predetermined variable magnetic field on the conveying surface (10) and thus allow the movement of said first transport element (21) and second transport element (22) above said conveying surface (10), wherein the electrically magnetisable elements (11) are configured to allow the generation of a variable magnetic field for moving the first and second transport elements (21, 22) of the conveying units (20) in at least a first and a second direction (x, y) on the conveying surface (10), **characterized in that**:
- the conveying surface (10) comprises a first portion (10A) and a second portion (10B), the first portion (10A) not coinciding with the second portion (10B), the control unit (30) being configured to control the electrically magnetisable elements (11) of the conveying surface (10) so as to move the first transport elements (21) in the first portion (10A) of the conveying surface (10) along a first closed path (12) and the second transport elements (22) in the second portion (10B) of the conveying surface (10) along a second closed path (13);
- the first transport elements (21) move along the first closed path (12) in a clockwise direction (w1) and the second transport elements (22) move along the second closed path (13) in an anticlockwise direction (w2).

2. The apparatus (1) according to claim 1, wherein said seat (23) defined by the first and second transport elements (21, 22) has an upper opening (25), to allow an insertion of articles (A) inside the seat (23).

3. The apparatus (1) according to claim 1 or 2, wherein the first and second transport elements (21, 22) respectively comprise a first portion (26A) for housing articles (A), defining a part of said seat, and a second portion (26B) housing the above-mentioned magnetic element (24).

4. The apparatus (1) according to any one of the preceding claims, wherein the first and the second transport elements (21, 22) have an equal shape.

5. The apparatus (1) according to any one of the preceding claims, wherein the electrically magnetisable elements (11) are configured to generate a variable magnetic field and rotate the first and second transport elements (21, 22) of the conveying units (20) about an axis of rotation on the conveying surface (10).

6. The apparatus (1) according to any one of the preceding claims, wherein the conveying surface (10) has an opening (15) made in it and the control unit (30) is configured to control the electrically magnetisable elements (11) of the conveying surface (10), so as to uncouple, at an unloading portion (15B) of said opening (15), the first and second transport elements (21, 22) and allow defective articles (A) contained in the seats (23) of said conveying units (20) to be discharged.

7. A packaging plant (100) comprising:
- an apparatus (1) for conveying articles (A) according to any one of claims 1 to 5, wherein the conveying surface (10) has an opening (15) made in it,
- a packaging line (110) to allow a packaging of the articles (A) conveyed by the conveying units (20), at least a portion of the packaging line (110) passing through an article trasfer portion (15B) of of the opening (15) of the conveying surface (10).

8. The packaging plant (100) according to claim 7, wherein the control unit (30) is configured to control the electrically magnetisable elements (11) of the conveying surface (10), so as to uncouple, at the article transfer portion (15B) of the opening (15) of the conveying surface (10), the first and second transport elements (22) for transferring the articles (A) contained in the seats (23) of said conveying units (20) to the packaging line (110).

9. A method (1) for conveying articles (A) with a device according to any one of claims 1 to 6 comprising the following steps:
- preparing the conveying surface (10);
- preparing a plurality of the units (20) for conveying articles (A);
- coupling the first and second transport elements (21, 22) to each other so as to define a seat (23) for housing articles (A) of a conveying unit (20);
- releasing articles (A) inside the housing seat (23) of the conveying unit (20);
- generating a predetermined variable magnetic field on the conveying surface (10), activating and deactivating said electrically magnetisable elements (11) and thus allow the movement of the first transport element (21) and the second transport element (22) above said conveying surface (10) in at least a first and a second direction (x, y) on the conveying surface (10), wherein:
- the first transport elements (21) move in the first portion (10A) of the conveying surface (10) along the first closed path (12) in a clockwise direction (w1) and the second transport elements (22) move in the second portion (10B) of the conveying surface (10) along the second closed path (13) in an anticlockwise direction (w2).

10. The method according to claim 9, wherein the step of generating a predetermined magnetic field variable on the conveying surface (10), activating and deactivating said electrically magnetisable elements (11), to thus allow the movement of the first transport element (21) and the second transport element (22) above said conveying surface (10), comprises a step of moving the first transport element (21) along a first closed path (12) lying on the conveying surface (10) and moving the second transport element (22) along a second closed path (13) lying on the conveying surface (10), said first and second closed paths (12, 13) being different from each other.

11. The method according to claim 9 or 10, comprising a step of uncoupling the first an d second transport elements (21, 22), at an unloading portion (15A) of an opening (15) of the conveying surface (10), so as to reject defective articles (A) contained in the housing seat (23) of said conveying unit (20).

12. The method according to any one of claims 9 to 11, wherein the step of releasing articles (A) inside the housing seat (23) of the above-mentioned at least one conveying unit (20) comprises a step of releasing articles (A) at the top inside the housing seat (23).

13. A packaging method comprising all the steps of the conveying method of claims 9 to 12, the packaging method comprising a step of packaging the articles (A) by means of a packaging line (110) to allow a packaging of the articles (A) not rejected.

14. The packaging method according to claim 13, comprising a step of uncoupling, at an article transfer portion (15B) of articles (A) of the opening (15) of the conveying surface (10), the first and second transport elements (21, 22) of a conveying unit (20) to transfer the articles (A) contained in the seat (23) of said conveying unit (20) to the packaging line (110), wherein at least one portion (110A) of the packaging line (110) passes through the article trasfer portion (15B) of the opening (15) of the conveying surface (10).

## Patentansprüche

1. Vorrichtung (1) zum Fördern von Artikeln (A), umfassend:
- eine Förderfläche (10), die eine Mehrzahl von elektrisch magnetisierbaren Elementen (11) umfasst;
- eine Mehrzahl von Einheiten (20) zum Fördern von Artikeln (A), die auf der Förderfläche (10) bewegbar sind, wobei jede Fördereinheit (20) durch ein erstes Transportelement (21) und ein zweites Transportelement (22) definiert ist, die dazu konfiguriert sind, miteinander gekoppelt zu werden und gemeinsam eine Aufnahme (23) zur Aufnahme von Artikeln (A) zu definieren, wobei das erste und das zweite Transportelement (21, 22) jeweils mindestens ein magnetisches Element (24) umfassen;
- eine Steuereinheit (30), die mit den elektrisch magnetisierbaren Elementen (11) der Förderfläche (10) verbunden ist, um diese zu aktivieren und zu deaktivieren, sodass ein vorbestimmtes veränderliches Magnetfeld auf der Förderfläche (10) erzeugt wird und dadurch die Bewegung des ersten Transportelements (21) und des zweiten Transportelements (22) über der Förderfläche (10) ermöglicht wird, wobei die elektrisch magnetisierbaren Elemente (11) dazu konfiguriert sind, die Erzeugung eines veränderlichen Magnetfelds zum Bewegen des ersten und des zweiten Transportelements (21, 22) der Fördereinheiten (20) zumindest in einer ersten und einer zweiten Richtung (x, y) auf der Förderfläche (10) zu ermöglichen, **dadurch gekennzeichnet, dass**:
- die Förderfläche (10) einen ersten Abschnitt (10A) und einen zweiten Abschnitt (10B) umfasst, wobei der erste Abschnitt (10A) nicht mit dem zweiten Abschnitt (10B) zusammenfällt, wobei die Steuereinheit (30) dazu konfiguriert ist, die elektrisch magnetisierbaren Elemente (11) der Förderfläche (10) so zu steuern, dass die ersten Transportelemente (21) im ersten Abschnitt (10A) der Förderfläche (10) entlang einer ersten geschlossenen Bahn (12) und die zweiten Transportelemente (22) im zweiten Abschnitt (10B) der Förderfläche (10) entlang einer zweiten geschlossenen Bahn (13) bewegt werden;
- die ersten Transportelemente (21) sich entlang der ersten geschlossenen Bahn (12) im Uhrzeigersinn (w1) bewegen und die zweiten Transportelemente (22) sich entlang der zweiten geschlossenen Bahn (13) entgegen dem Uhrzeigersinn (w2) bewegen.

2. Vorrichtung (1) nach Anspruch 1, wobei die durch das erste und das zweite Transportelement (21, 22) definierte Aufnahme (23) eine obere Öffnung (25) aufweist, um ein Einführen von Artikeln (A) in die Aufnahme (23) zu ermöglichen.

3. Vorrichtung (1) nach Anspruch 1 oder 2, wobei das erste und das zweite Transportelement (21, 22) jeweils einen ersten Abschnitt (26A) zur Aufnahme von Artikeln (A), der einen Teil der Aufnahme definiert, und einen zweiten Abschnitt (26B), der das vorgenannte magnetische Element (24) aufnimmt, umfassen.

4. Vorrichtung (1) nach einem der vorhergehenden Ansprüche, wobei das erste und das zweite Transportelement (21, 22) die gleiche Form aufweisen.

5. Vorrichtung (1) nach einem der vorhergehenden Ansprüche, wobei die elektrisch magnetisierbaren Elemente (11) dazu konfiguriert sind, ein veränderliches Magnetfeld zu erzeugen und das erste und das zweite Transportelement (21, 22) der Fördereinheiten (20) um eine Drehachse auf der Förderfläche (10) zu drehen.

6. Vorrichtung (1) nach einem der vorhergehenden Ansprüche, wobei die Förderfläche (10) eine darin ausgebildete Öffnung (15) aufweist und die Steuereinheit (30) dazu konfiguriert ist, die elektrisch magnetisierbaren Elemente (11) der Förderfläche (10) so zu steuern, dass das erste und das zweite Transportelement (21, 22) an einem Auswurfabschnitt (15B) der Öffnung (15) entkoppelt werden und fehlerhafte Artikel (A), die in den Aufnahmen (23) dieser Fördereinheiten (20) enthalten sind, ausgeworfen werden können.

7. Verpackungsanlage (100), umfassend:
- eine Vorrichtung (1) zum Fördern von Artikeln (A) nach einem der Ansprüche 1 bis 5, wobei die Förderfläche (10) eine darin ausgebildete Öffnung (15) aufweist;
- eine Verpackungslinie (110), um ein Verpacken der von den Fördereinheiten (20) geförderten Artikel (A) zu ermöglichen, wobei mindestens ein Abschnitt der Verpackungslinie (110) durch einen Artikelübergabeabschnitt (15B) der Öffnung (15) der Förderfläche (10) verläuft.

8. Verpackungsanlage (100) nach Anspruch 7, wobei die Steuereinheit (30) dazu konfiguriert ist, die elektrisch magnetisierbaren Elemente (11) der Förderfläche (10) so zu steuern, dass das erste und das zweite Transportelement (22) am Artikelübergabeabschnitt (15B) der Öffnung (15) der Förderfläche (10) entkoppelt werden, um die in den Aufnahmen (23) dieser Fördereinheiten (20) enthaltenen Artikel (A) an die Verpackungslinie (110) zu übergeben.

9. Verfahren (1) zum Fördern von Artikeln (A) mit einer Vorrichtung nach einem der Ansprüche 1 bis 6, umfassend die folgenden Schritte:
- Bereitstellen der Förderfläche (10);
- Bereitstellen einer Mehrzahl von Einheiten (20) zum Fördern von Artikeln (A);
- Koppeln des ersten und des zweiten Transportelements (21, 22) miteinander, um eine Aufnahme (23) zur Aufnahme von Artikeln (A) einer Fördereinheit (20) zu definieren;
- Freigeben von Artikeln (A) innerhalb der Aufnahme (23) der Fördereinheit (20);
- Erzeugen eines vorbestimmten veränderlichen Magnetfelds auf der Förderfläche (10) durch Aktivieren und Deaktivieren der elektrisch magnetisierbaren Elemente (11), wodurch die Bewegung des ersten Transportelements (21) und des zweiten Transportelements (22) über der Förderfläche (10) zumindest in einer ersten und einer zweiten Richtung (x, y) auf der Förderfläche (10) ermöglicht wird, wobei:
- die ersten Transportelemente (21) sich im ersten Abschnitt (10A) der Förderfläche (10) entlang der ersten geschlossenen Bahn (12) im Uhrzeigersinn (w1) bewegen und die zweiten Transportelemente (22) sich im zweiten Abschnitt (10B) der Förderfläche (10) entlang der zweiten geschlossenen Bahn (13) entgegen dem Uhrzeigersinn (w2) bewegen.

10. Verfahren nach Anspruch 9, wobei der Schritt des Erzeugens eines vorbestimmten veränderlichen Magnetfelds auf der Förderfläche (10) durch Aktivieren und Deaktivieren der elektrisch magnetisierbaren Elemente (11), wodurch die Bewegung des ersten Transportelements (21) und des zweiten Transportelements (22) über der Förderfläche (10) ermöglicht wird, einen Schritt des Bewegens des ersten Transportelements (21) entlang einer auf der Förderfläche (10) liegenden ersten geschlossenen Bahn (12) und des Bewegens des zweiten Transportelements (22) entlang einer auf der Förderfläche (10) liegenden zweiten geschlossenen Bahn (13) umfasst, wobei die erste und die zweite geschlossene Bahn (12, 13) voneinander verschieden sind.

11. Verfahren nach Anspruch 9 oder 10, umfassend einen Schritt des Entkoppelns des ersten und des zweiten Transportelements (21, 22) an einem Auswurfabschnitt (15A) einer Öffnung (15) der Förderfläche (10), um fehlerhafte Artikel (A) auszusondern, die in der Aufnahme (23) dieser Fördereinheit (20) enthalten sind.

12. Verfahren nach einem der Ansprüche 9 bis 11, wobei der Schritt des Freigebens von Artikeln (A) innerhalb der Aufnahme (23) der vorgenannten mindestens einen Fördereinheit (20) einen Schritt des Freigebens von Artikeln (A) von oben in die Aufnahme (23) hinein umfasst.

13. Verpackungsverfahren, umfassend sämtliche Schritte des Förderverfahrens nach den Ansprüchen 9 bis 12, wobei das Verpackungsverfahren einen Schritt des Verpackens der Artikel (A) mittels einer Verpackungslinie (110) umfasst, um ein Verpacken der nicht ausgesonderten Artikel (A) zu ermöglichen.

14. Verpackungsverfahren nach Anspruch 13, umfassend einen Schritt des Entkoppelns des ersten und des zweiten Transportelements (21, 22) einer Fördereinheit (20) an einem Artikelübergabeabschnitt (15B) der Öffnung (15) der Förderfläche (10), um die in der Aufnahme (23) dieser Fördereinheit (20) enthaltenen Artikel (A) an die Verpackungslinie (110) zu übergeben, wobei mindestens ein Abschnitt (110A) der Verpackungslinie (110) durch den Artikelübergabeabschnitt (15B) der Öffnung (15) der Förderfläche (10) verläuft.

## Revendications

1. Appareil (1) pour transporter des articles (A), comprenant :
- une surface de transport (10) comprenant une pluralité d'éléments magnétisables électriquement (11) ;
- une pluralité d'unités (20) pour transporter des articles (A), mobiles sur ladite surface de transport (10), chaque unité de transport (20) étant définie par un premier élément de transport (21) et par un second élément de transport (22) configurés pour s'accoupler l'un à l'autre et définissant, ensemble, un logement (23) destiné à recevoir des articles (A), les premier et second éléments de transport (21, 22) comprenant chacun au moins un élément magnétique (24) ;
- une unité de commande (30), reliée auxdits éléments magnétisables électriquement (11) de la surface de transport (10) pour les activer et les désactiver de manière à générer un champ magnétique variable prédéterminé sur la surface de transport (10) et à permettre ainsi le déplacement dudit premier élément de transport (21) et dudit second élément de transport (22) au-dessus de ladite surface de transport (10), les éléments magnétisables électriquement (11) étant configurés pour permettre la génération d'un champ magnétique variable destiné à déplacer les premier et second éléments de transport (21, 22) des unités de transport (20) au moins dans une première et une seconde direction (x, y) sur la surface de transport (10),
**caractérisé en ce que** :
- la surface de transport (10) comprend une première portion (10A) et une seconde portion (10B), la première portion (10A) ne coïncidant pas avec la seconde portion (10B), l'unité de commande (30) étant configurée pour commander les éléments magnétisables électriquement (11) de la surface de transport (10) de manière à déplacer les premiers éléments de transport (21) dans la première portion (10A) de la surface de transport (10) le long d'une première trajectoire fermée (12) et les seconds éléments de transport (22) dans la seconde portion (10B) de la surface de transport (10) le long d'une seconde trajectoire fermée (13) ;
- les premiers éléments de transport (21) se déplacent le long de la première trajectoire fermée (12) dans un sens horaire (w1) et les seconds éléments de transport (22) se déplacent le long de la seconde trajectoire fermée (13) dans un sens antihoraire (w2).

2. Appareil (1) selon la revendication 1, dans lequel ledit logement (23) défini par les premier et second éléments de transport (21, 22) présente une ouverture supérieure (25) permettant l'introduction des articles (A) à l'intérieur du logement (23).

3. Appareil (1) selon la revendication 1 ou 2, dans lequel les premier et second éléments de transport (21, 22) comprennent respectivement une première portion (26A) destinée à recevoir des articles (A), définissant une partie dudit logement, et une seconde portion (26B) logeant l'élément magnétique (24) précité.

4. Appareil (1) selon l'une quelconque des revendications précédentes, dans lequel les premier et second éléments de transport (21, 22) présentent une forme identique.

5. Appareil (1) selon l'une quelconque des revendications précédentes, dans lequel les éléments magnétisables électriquement (11) sont configurés pour générer un champ magnétique variable et faire tourner les premier et second éléments de transport (21, 22) des unités de transport (20) autour d'un axe de rotation sur la surface de transport (10).

6. Appareil (1) selon l'une quelconque des revendications précédentes, dans lequel la surface de transport (10) comporte une ouverture (15) pratiquée dans celle-ci et l'unité de commande (30) est configurée pour commander les éléments magnétisables électriquement (11) de la surface de transport (10) de manière à désaccoupler, au niveau d'une portion de déchargement (15B) de ladite ouverture (15), les premier et second éléments de transport (21, 22) et permettre l'évacuation des articles (A) défectueux contenus dans les logements (23) desdites unités de transport (20).

7. Installation de conditionnement (100) comprenant :
- un appareil (1) pour transporter des articles (A) selon l'une quelconque des revendications 1 à 5, dans lequel la surface de transport (10) comporte une ouverture (15) pratiquée dans celle-ci ;
- une ligne de conditionnement (110) permettant le conditionnement des articles (A) transportés par les unités de transport (20), au moins une portion de la ligne de conditionnement (110) traversant une portion de transfert d'articles (15B) de l'ouverture (15) de la surface de transport (10).

8. Installation de conditionnement (100) selon la revendication 7, dans laquelle l'unité de commande (30) est configurée pour commander les éléments magnétisables électriquement (11) de la surface de transport (10), de manière à désaccoupler, au niveau de la portion de transfert d'articles (15B) de l'ouverture (15) de la surface de transport (10), les premier et second éléments de transport (22) pour transférer les articles (A) contenus dans les logements (23) desdites unités de transport (20) à la ligne de conditionnement (110).

9. Procédé (1) pour transporter des articles (A) au moyen d'un dispositif selon l'une quelconque des revendications 1 à 6, comprenant les étapes suivantes :
- préparer la surface de transport (10) ;
- préparer une pluralité d'unités (20) pour transporter des articles (A) ;
- accoupler les premier et second éléments de transport (21, 22) l'un à l'autre de manière à définir un logement (23) destiné à recevoir des articles (A) d'une unité de transport (20) ;
- libérer des articles (A) à l'intérieur du logement (23) de ladite unité de transport (20) ;
- générer un champ magnétique variable prédéterminé sur la surface de transport (10), en activant et en désactivant lesdits éléments magnétisables électriquement (11) et permettre ainsi le déplacement du premier élément de transport (21) et du second élément de transport (22) au-dessus de ladite surface de transport (10) au moins dans une première et une seconde direction (x, y) sur la surface de transport (10), dans lequel :
- les premiers éléments de transport (21) se déplacent dans la première portion (10A) de la surface de transport (10) le long de la première trajectoire fermée (12) dans un sens horaire (w1) et les seconds éléments de transport (22) se déplacent dans la seconde portion (10B) de la surface de transport (10) le long de la seconde trajectoire fermée (13) dans un sens antihoraire (w2).

10. Procédé selon la revendication 9, dans lequel l'étape de génération d'un champ magnétique variable prédéterminé sur la surface de transport (10), en activant et en désactivant lesdits éléments magnétisables électriquement (11), afin de permettre ainsi le déplacement du premier élément de transport (21) et du second élément de transport (22) au-dessus de ladite surface de transport (10), comprend une étape de déplacement du premier élément de transport (21) le long d'une première trajectoire fermée (12) située sur la surface de transport (10) et de déplacement du second élément de transport (22) le long d'une seconde trajectoire fermée (13) située sur la surface de transport (10), lesdites première et seconde trajectoires fermées (12, 13) étant différentes l'une de l'autre.

11. Procédé selon la revendication 9 ou 10, comprenant une étape de désaccouplement des premier et second éléments de transport (21, 22), au niveau d'une portion de déchargement (15A) d'une ouverture (15) de la surface de transport (10), de manière à rejeter les articles (A) défectueux contenus dans le logement (23) de ladite unité de transport (20).

12. Procédé selon l'une quelconque des revendications 9 à 11, dans lequel l'étape de libération d'articles (A) à l'intérieur du logement (23) de l'unité de transport (20) précitée comprend une étape de libération d'articles (A) par le haut à l'intérieur du logement (23).

13. Procédé de conditionnement comprenant toutes les étapes du procédé de transport selon les revendications 9 à 12, le procédé de conditionnement comprenant une étape de conditionnement des articles (A) au moyen d'une ligne de conditionnement (110) pour permettre le conditionnement des articles (A) non rejetés.

14. Procédé de conditionnement selon la revendication 13, comprenant une étape de désaccouplement, au niveau d'une portion de transfert d'articles (15B) de l'ouverture (15) de la surface de transport (10), des premier et second éléments de transport (21, 22) d'une unité de transport (20) afin de transférer les articles (A) contenus dans le logement (23) de ladite unité de transport (20) à la ligne de conditionnement (110), dans lequel au moins une portion (110A) de la ligne de conditionnement (110) traverse la portion de transfert d'articles (15B) de l'ouverture (15) de la surface de transport (10).
